# EUROPEAN PATENT SPECIFICATION

(11) **EP 1 354 161 B1**
(45) Date of publication and mention of the grant of the patent: **31.08.2005**
(21) Application number: 01272385.4
(22) Date of filing: 27.11.2001
(51) Int. Cl.: F16L 5/04

(54) **SEALING SYSTEM**
DICHTUNGSSYSTEM
SYSTEME D'ETANCHEITE

(30) Priority: 30.11.2000 NL 1016749
(43) Date of publication of application: 22.10.2003
(73) Proprietor: Beele Engineering B.V., 7122 NZ Aalten (NL)
(72) Inventor: BEELE, Johannes, Alfred, NL-7122 NZ AALTEN (NL)
(74) Representative: Winckels, Johannes Hubertus F.
(86) International application number: PCT/NL2001/000862
(87) International publication number: WO 2002/052187

(56) References cited:
- EP-A- 0 994 287
- WO-A-01/09538
- US-A- 5 953 872

## Description

The invention relates to a sealing system comprising an at least substantially cylindrical tube and at least two sealing collars at least partially made of an elastic material, which are arranged round the tube in spaced-apart relationship for sealing confinement by collaring or the tube in a bushing which is co-axial with said tube. A sealing system of this kind is known from document WO-A-0 109 538 and is cited pursuant Articles 54(3) and (4) EPC.

In the fitted position of the known system, an air space is present between the sealing collars, which air space is bounded by the bushing and, as already said before, the sealing collars. In the case of a fire, for example on one side of the bushing, the excellent thermal insulation properties of said air space prevent the other side of the bushing becoming (too) hot for some time. In practice it has become apparent, however, that the temperature in the air space can run up so high when there is a fire that the sealing collars are forced out owing to the increased pressure prevailing within the air space, with all its adverse consequences as regards fire safety. After all, if the known system is fitted in a ship's deck, for example, fire can freely propagate through the bushing and into the ship when the sealing collars are forced out and the sealing function is thus lost.

The object of the invention is to overcome the above-indicated drawback of the prior art, and in order to accomplish that objective, a sealing system of the kind referred to in the introduction differs therefrom in that the spacing between the sealing collars is less than 25 mm, with said sealing collars comprising an expandable material, in such an amount and of such a composition that the sealing collars will expand in the case of a fire, in such a manner that they will become wedged in the bushing. Preferably, the spacing between the sealing collars is less than 20 mm, in particular less than 15 mm, more in particular 10 mm or less. As a result, the thermal insulation properties of the air space will be retained in the case of a fire, whilst eliminating the risk of the pressure running up so high therein that the sealing collars are forced out, partially because of the fact that the sealing collars will swell as a result of the expansion reaction, thus fixing themselves in position in the bushing. At the very most, the sealing collars can be forced out over a distance of a few millimetres in the case of a fire, but they will remain substantially in position in such a case, as a result of which their sealing function is retained.

In one preferred embodiment of a sealing system according to the invention, the sealing collars comprise circular outer ribs and circular inner ribs, which outer ribs have an outside diameter which is larger than the inside diameter of the bushing, and wherein the inside diameter of the inner ribs is at most substantially equal to the outside diameter of the tube. In particular, the sealing collars each comprise at least two shell members, whose abutting boundary surfaces extend at least substantially in axial direction, wherein the rear flanks, seen in the direction of insertion, of the outer, serrated ribs extend in radial direction and the inner ribs are arranged in pairs in the radial area of the outwardly extending tips of the outer serrated ribs. The inner ribs of the sealing collars are preferably trapezoidal in shape, seen in the direction of the axial longitudinal section.

The advantages of the above aspects will be explained in more detail hereafter in the description of the figures.

The invention also relates to a sealing collar apparently suitable for use in a sealing system according to the invention.

The invention will now be explained in more detail with reference to a figure shown in a drawing, which schematically shows a sealing system according to the invention in perspective view.

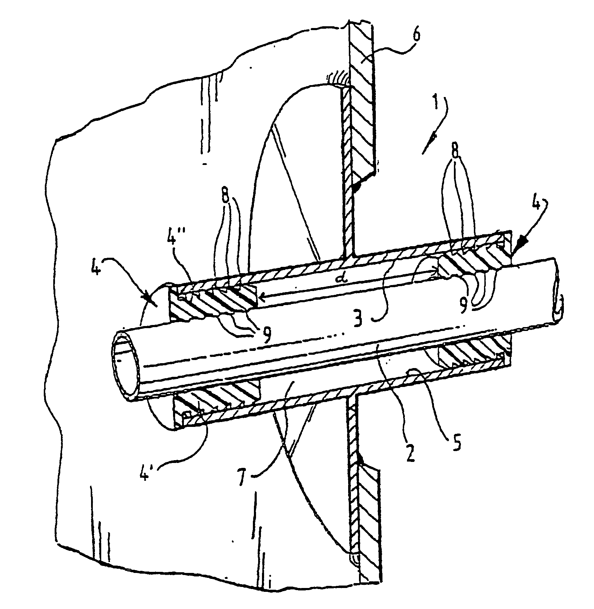

The figure shows a sealing system 1, comprising a metal (for example steel or copper) tube 2 of cylindrical cross-section, a bushing 3, likewise made of a metal (for example aluminium or steel), which extends co-axially with the tube 2, as well as two rubber sealing collars 4. Said sealing collars 4 are fitted in spaced-apart relationship round the tube 2 in the annular space between the tube 2 and the bushing 3 for the purpose of retaining the tube 2 in the bushing 3 in a gastight and watertight manner. The bushing 3 is fitted in a steel ship's deck 6, for example, or in any other wall, partition or the like.

Each sealing collar 4 of elastic rubber is preferably formed of two identical, shell-shaped collar halves 4', 4'', whose abutting boundary surfaces extend in axial direction. The collar halves 4', 4'' are provided with ribs 8 of right-angled triangular cross-section on the outer side and trapezoidal ribs 9 on the inner side. When the sealing collars 4 are forced into the annular space 5 and around the tube 2, the ribs 8 thereof are compressed by the bushing 3, as a result of which respective ribs 9 positioned opposite said ribs 8 will undergo a diameter reduction, so that they will press on the outer side of the tube 2 forcefully and sealingly. As a result of the pressures that are thus produced in the rubber, the abutting boundary surfaces of the collar halves 4', 4'' of a sealing collar 4 are furthermore squeezed together sealingly, without external pressure means being required.

Extensive tests have shown that in the case of a fire, for example on one side of the ship's deck, the air space 7 that is present between the sealing collars 4 provides excellent thermal insulation, it is true, thus helping prevent excessive heating of the other side of the ship's deck 6, but that the fire will cause the air temperature in the air space 7 to run up so high that the resulting increasing air pressure in the air space 7 will force the sealing collars 4 out of the annular space 5 in such a case. It stands to reason that the adverse effects will be incalculable in that case, since a seal is no longer provided as a consequence of the function of the sealing collars 4 being lost (after all, said sealing collars no longer surround the tube 2 in the annular space 5) . It has become apparent that wrapping the bushing 3 in rock wool is not a suitable solution for keeping the temperature in the air space 7 within acceptable bounds in the case of a fire.

The invention is based on the hitherto unrealised insight that a solution for the phenomenon referred to above can be provided by selecting a spacing of less than 25 mm between the sealing collars 4, and thus also a smaller length of the annular space 17, and forming the sealing collars 4 of an expandable material, in such an amount and of such a composition that the sealing collars 4 will expand in such a manner that they will become wedged in the bushing 3 in the case of a fire. As a result, the thermal insulation provided by the air space 7 will not be lost when there is a fire, whilst the air pressure therein can at no time run up so high that the sealing collars are forced out of the annular space 5. At the very most, the sealing collars 4 can be forced out over a width of one or more ribs 9 in the case of a fire, but the sealing collars 4 will remain substantially in position in such a case, as a result of which their sealing function is retained. The expandable rubber material of the sealing collars 4 comprises in particular expandable graphite. It has been proved by experiments that this graphite is extremely suitable for causing the sealing collars 4 to expand in the case of a fire.

Preferably, the spacing mm between the sealing collars 4 is less than 20 mm, in particular less than 15 mm, more in particular less than or equal to 10 mm.

## Claims

1. A sealing system (1) comprising an at least substantially cylindrical tube (2) and at least two sealing collars (4) at least partially made of an elastic material, which are arranged round the tube (2) in spaced-apart relationship for sealing confinement by collaring of the tube (2) in a bushing (3) which is co-axial with said tube (2), wherein the spacing (d) between the sealing collars (4) is less than 25 mm, with said sealing collars (4) comprising an expandable material, in such an amount and of such a composition that the sealing collars (4) will expand in the case of a fire, in such a manner that they will become wedged in the bushing (3).

2. A sealing system (1) according to claim 1, wherein the spacing (d) between the sealing collars (4) is less than 20 mm, in particular less than 15 mm, more in particular 10 mm or less.

3. A sealing system (1) according to claim 1 or 2, wherein the sealing collars (4) comprise circular outer ribs (8) and circular inner ribs (9), which outer ribs (8) have an outside diameter which is larger than the inside diameter of the bushing (3), and wherein the inside diameter of the inner ribs (9) is at most substantially equal to the outside diameter of the tube (2).

4. A sealing system (1) according to claim 1, 2 or 3, wherein the sealing collars (4) each comprise at least two shell members (4', 4''), whose abutting boundary surfaces extend at least substantially in axial direction, wherein the rear flanks, seen in the direction of insertion, of the outer, serrated ribs (8) extend in radial direction and the inner ribs (9) are arranged in pairs in the radial area of the outwardly extending tips of the outer serrated ribs (8).

5. A sealing system (1) according to any one of the preceding claims 1 - 4, wherein the inner ribs (9) of the sealing collars (4) are trapezoidal in shape, seen in the direction of the axial longitudinal section.

## Patentansprüche

1. Dichtungssystem (1), das ein wenigstens im wesentlichen zylindrisches Rohr (2) und wenigstens zwei wenigstens teilweise aus einem elastischen Material hergestellte Dichtkragen (4) umfaßt, die um das Rohr (2) in Abstand voneinander angeordnet sind, für abdichtenden Einschluß durch Kragenbildung um das Rohr (2) in einer Durchführung (3), die koaxial mit besagtem Rohr (2) verläuft, wobei der Abstand (d) zwischen den Dichtkragen (4) geringer ist als 25 mm, wobei besagte Dichtkragen (4) ein expandierbares Material umfassen, in solch einer Menge und mit solch einer Zusammensetzung, daß die Dichtkragen (4) im Falle eines Feuers so expandieren werden, daß sie sich in der Durchführung (3) verkeilen.

2. Dichtungssystem (1) nach Anspruch 1, **dadurch gekennzeichnet, daß** der Abstand (d) zwischen den Dichtkragen (4) geringer ist als 20 mm, insbesondere geringer als 15 mm, noch mehr bevorzugt 10 mm oder weniger.

3. Dichtungssystem (1) nach Anspruch 1 oder 2, **dadurch gekennzeichnet, daß** die Dichtkragen (4) kreisförmige äußere Rippen (8) und kreisförmige innere Rippen (9) umfassen, wobei die äußeren Rippen (8) einen Außendurchmesser aufweisen, der größer ist als der Innendurchmesser der Durchführung (3), und wobei der Innendurchmesser der inneren Rippen (9) höchstens im wesentlichen gleich dem Außendurchmesser des Rohres (2) ist.

4. Dichtungssystem (1) nach Anspruch 1, 2 oder 3, **dadurch gekennzeichnet, daß** die Dichtkragen (4) jeweils wenigstens zwei Schalenteile (4', 4") umfassen, deren gegeneinanderstoßende Grenzflächen sich wenigstens im wesentlichen in axialer Richtung erstrecken, wobei die hinteren Flanken, gesehen in der Einführungsrichtung, der äußeren, gezahnten Rippen (8) sich in radialer Richtung erstrecken und die inneren Rippen (9) in Paaren im Radialbereich der sich nach außen erstreckenden Spitzen der äußeren gezahnten Rippen (8) angeordnet sind.

5. Dichtungssystem (1) nach einem der vorangehenden Ansprüche 1 bis 4, **dadurch gekennzeichnet, daß** die inneren Rippen (9) der Dichtkragen (4) trapezoidförmig sind, gesehen in der Richtung des axialen Längsschnittes.

## Revendications

1. Système d'étanchéité (1) comportant au moins un tube pratiquement cylindrique (2) et au moins deux colliers d'étanchéité (4) formés au moins partiellement d'un matériau élastique, qui sont disposés autour du tube (2) en étant distants afin qu'ils assurent un confinement étanche par retenue avec des colliers du tube (2) dans un manchon (3) qui est coaxial au tube (2), dans lequel l'espacement (d) des colliers d'étanchéité (4) est inférieur à 25 mm, les colliers d'étanchéité (4) comprenant un matériau dilatable, présent en quantité et avec une composition telles que les colliers d'étanchéité (4) se dilatent en cas d'incendie d'une manière telle qu'ils se coincent dans le manchon (3).

2. Système d'étanchéité (1) selon la revendication 1, dans lequel l'espacement (d) des colliers d'étanchéité (4) est inférieur à 20 mm et en particulier inférieur à 15 mm et plus précisément inférieur ou égal à 10 mm.

3. Système d'étanchéité (1) selon la revendication 1 ou 2, dans lequel les colliers d'étanchéité (4) comprennent des nervures externes circulaires (8) et des nervures internes circulaires (9), les nervures externes (8) ayant un diamètre externe supérieur au diamètre interne du manchon (3), et le diamètre interne des nervures internes (9) étant au plus pratiquement égal au diamètre externe du tube (2).

4. Système d'étanchéité (1) selon la revendication 1, 2 ou 3, dans lequel les colliers d'étanchéité (4) comportent chacun au moins deux organes de coquille (4', 4") dont les surfaces limites en butée s'étendent au moins pratiquement dans la direction axiale, et les flancs arrière, vus dans la direction d'insertion, des nervures externes crénelées (8) s'étendent en direction radiale et les nervures internes (9) sont disposées par paires dans la direction radiale des bouts qui s'étendent vers l'extérieur des nervures externes crénelées (8).

5. Système d'étanchéité (1) selon l'une quelconque des revendications précédentes 1 à 4, dans lequel les nervures internes (9) des colliers d'étanchéité (4) ont une forme trapézoïdale, vue dans la direction d'une section longitudinale axiale.
